# EUROPEAN PATENT SPECIFICATION

(11) **EP 1 038 847 B1**
(45) Date of publication and mention of the grant of the patent: **16.07.2003**
(21) Application number: 99830157.6
(22) Date of filing: 22.03.1999
(51) Int. Cl.: C03C 15/00, B44C 1/22

(54) **Device and method for etching glass sheets with acid**
Vorrichtung und Verfahren zum Ätzen von Flachglas mit Säure
Dispositif et procédé pour attaquer des feuilles de verre à l'aide d'acide

(43) Date of publication of application: 27.09.2000
(73) Proprietor: Vitreal Specchi S.r.L., 22066 Mariano Comense (Como) (IT)
(72) Inventor: Bresciani, Alberto, 22066 Mariano Comense (Como) (IT)
(74) Representative: Long, Giorgio

(56) References cited:
- DE-A- 3 535 209
- FR-A- 2 702 765
- US-A- 3 616 048
- US-A- 4 427 488
- DATABASE WPI Section Ch, Week 7746 Derwent Publications Ltd., London, GB; Class A97, AN 77-82150Y XP002112655 & JP 52 120003 A (DAINIPPON PRINTING CO LTD), 8 October 1977 (1977-10-08)

## Description

This invention relates to a method for etching glass sheets with acid and to a device for implementing this method.

The technique of etching glass sheets with acid to impress the desired patterns thereon is widely known.

Generally, this technique consists of an initial masking of the glass surface to be etched with suitably contoured masks. The glass surface is then put in contact with the acid, generally a solution of hydrofluoric acid, which chemically and selectively engraves the glass without affecting the masked areas.

In addition, suitable devices for etching are also known, particularly for etching large sized glass sheets which are difficult to handle. These devices load the sheet of glass in a substantially vertical position - which is the preferred position for transportation - onto a suitable flat support which is then moved into a horizontal or slightly slanted position, which is preferred for subsequent etching with acid.

It should be noted that etching large sheets of glass has a considerable advantage in terms of optimizing process productivity, as these sheets of glass, once suitably etched, can be cut into glass panes of the required size.

As mentioned, the known methods allow sheets of glass with geometrical designs or patterns to be obtained. However, the state of the art does not enable the glass to be worked with acid so as to give it special aesthetic effects, such as an antique appearance or to produce glass with varying degrees of opacity, that is with shaded contours.

The problem which this invention is based on, consequently, is that of obtaining glass with the above characteristics.

This problem is solved with a method for acid-etching glass as claimed in the appended claims.

An additional subject of this invention is a device specifically designed to implement this acid etching method, particularly on large sheets of glass, as claimed in the appended claims.

Additional characteristics and advantages of the method for acid-etching glass and of the device that forms the subject of the present invention will emerge more clearly from the description of an embodiment, given below by way of non-limiting example, with reference to the following figures:
Figure 1 illustrates a perspective view of the device according to this invention in the position for loading the sheet of glass;
Figure 2 illustrates a perspective view of the device in Figure 1 in the working position;

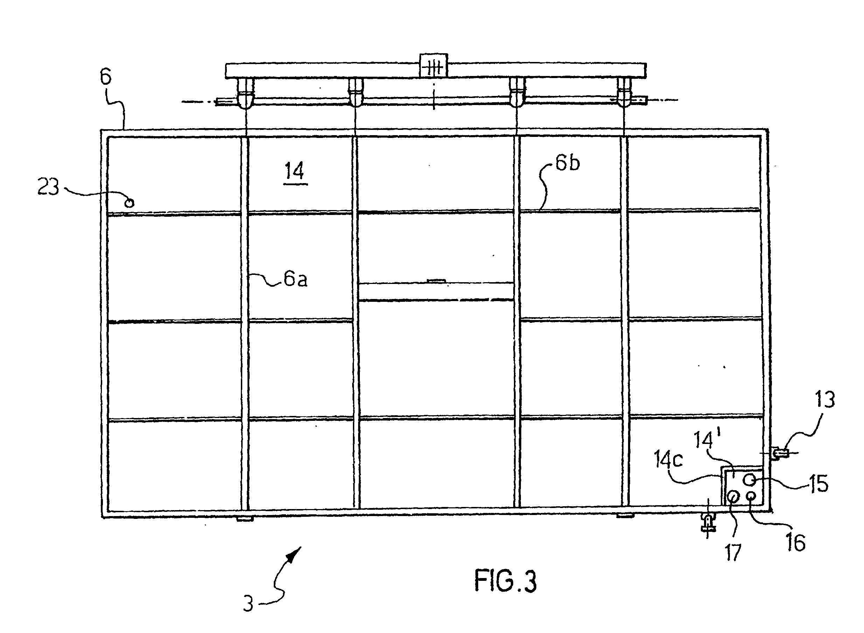

Figure 3 illustrates a schematic plan view from above of the device in Figure 1;
Figure 4 illustrates a schematic front cross-sectional view of the device according to this invention in a pre-working phase;
Figure 5 illustrates the view in Figure 4 in the working phase;
Figure 6 illustrates a schematic front cross-sectional view of the device according to a second form of embodiment of this invention, in a pre-working phase;
Figure 7 illustrates the view in Figure 6 in the working phase;
Figure 8 illustrates a schematic front cross-sectional view of the device according to a third form of embodiment of this invention, in the working phase.

The device which is the subject of this invention will now be described with reference to the above figures.

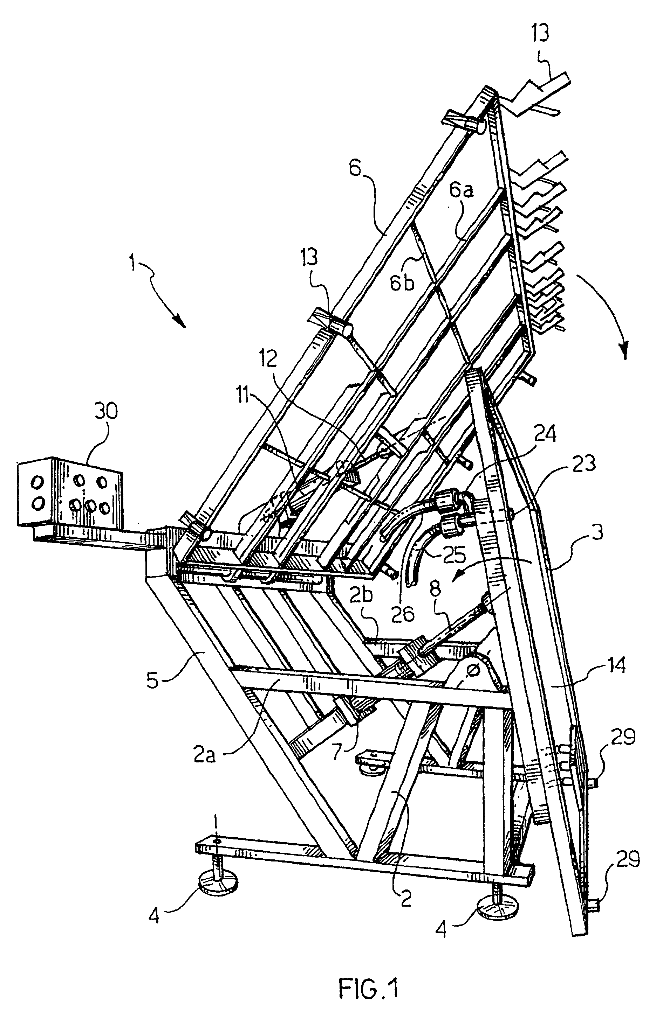

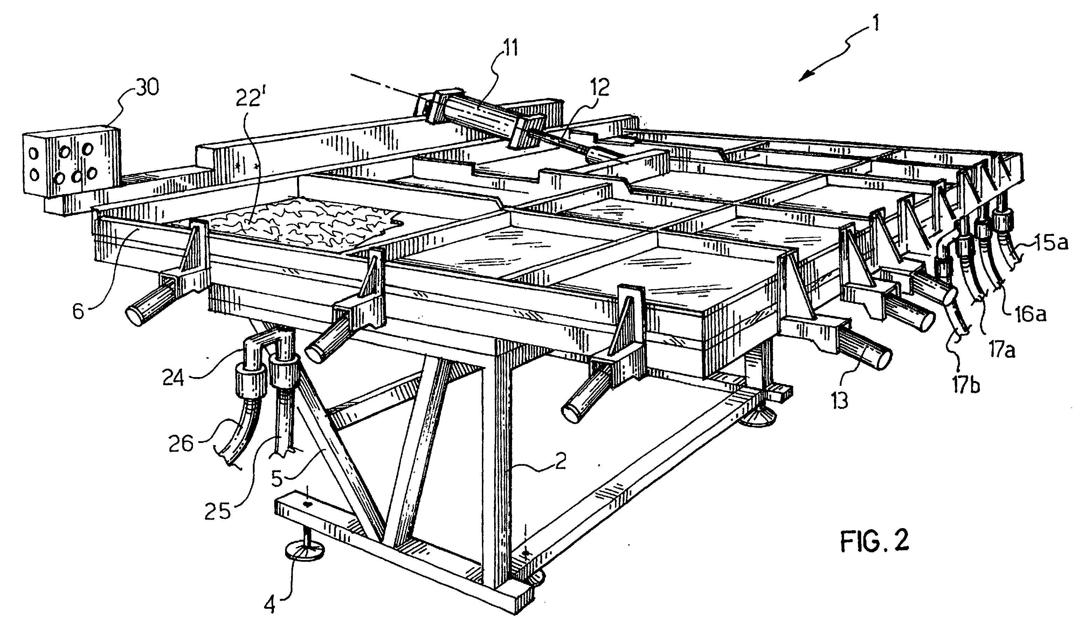

The device 1 for etching a sheet of glass with acid comprises a stand 2 on the front portion of which a support 3 for a sheet of glass is hinged. This support 3 can thus pivot about a horizontal axis which is parallel to the axis of the stand 2. Consequently, it can assume a substantially vertical position to allow a sheet of glass to be loaded (Figure 1) and a substantially horizontal working position (Figure 2).

The stand 2 can comprise supporting feet 4.

In addition, the stand 2 comprises a fixed rear structure 5 which extends upwards from the base of the stand, diverging away from the latter. The stand is completed by two horizontal side bars 2a, 2b which join the upper part of the stand to the rear structure 5 and which act as reinforcements. Furthermore, these side bars 2a, 2b are supporting points for the support 3 when it is in the working position.

The rear structure 5 supports an actuator 7 which acts via a piston 8 on the support 3, to the underside of which said piston is hinged.

A retention frame 6 is hinged to the upper end of the rear structure 5. The frame 6 can, as a consequence, assume a raised position (Figure 1) and a horizontal working position (Figure 2). In the latter position, as will be described in greater detail below, the frame 6 is in contact with the upper surface of the glass to be worked, with the function of holding it in place.

The frame 6 consists of a perimetral frame and a plurality of crossing crosspieces 6a, 6b. Elastic seals 9, preferably made of rubber or other synthetic material, are arranged on the underside of the frame 6, which is destined to come into contact with the sheet of glass, on the underside of said frame and of said crosspieces.

Similarly, elastic seals 10 of the same type are arranged along the entire length of the internal edge of the support 3, on which the sheet of glass is placed, as will be described in greater detail below.

In addition, the rear structure 5 supports a second actuator 11 the piston 12 of which is hinged to the upper side of the frame 6.

On the frame 6, along the perimetral frame, a plurality of removable clamping devices 13 are fixed, such as, for example, manual or pneumatic clamps. These clamping devices 13 are arranged so as to clamp the sheet of glass between the support 3 and the frame 6 during the working process (Figure 2).

The shape and dimensions of the support 3 substantially correspond to those of the sheet of glass. In particular, said sheet of glass will be carefully placed inside the perimetral frame of the support 3 on the seal 10.

The support 3 is modelled so as to comprise, within its perimetral edge, a tank 14 for the acid. In practice, once the sheet of glass is placed on the perimetral seal 10, the tank 14 is located under the sheet of glass so as to allow contact between the underside of the sheet of glass and the acid.

The tank 14 has a bottom 14a and perimetral ridged edges 14b.

Obviously, this tank, as with all the parts of the device which come into contact with the acid, is made of acid-resistant material. In particular, the tank 14 can be made of stainless steel or a suitable plastic material.

The tank 14 comprises, close to one of its four apexes and preferably near one of the two front apexes, a portion 14' enclosed by ridged edges 14c which contains tubular fittings for supplying and draining the acid and the rinsing water.

In particular, the device comprises a first tubular fitting 15 for letting in the acid and a second tubular fitting 16 for letting in the rinsing water. The latter may have a smaller diameter than said first fitting 15.

Furthermore, the device has a tubular fitting 17 for draining the acid and the rinsing water.

The tubular fittings 15, 16 and 17 are connected in a leaktight manner to respective pipes 15a, 16a, 17a and 17b.

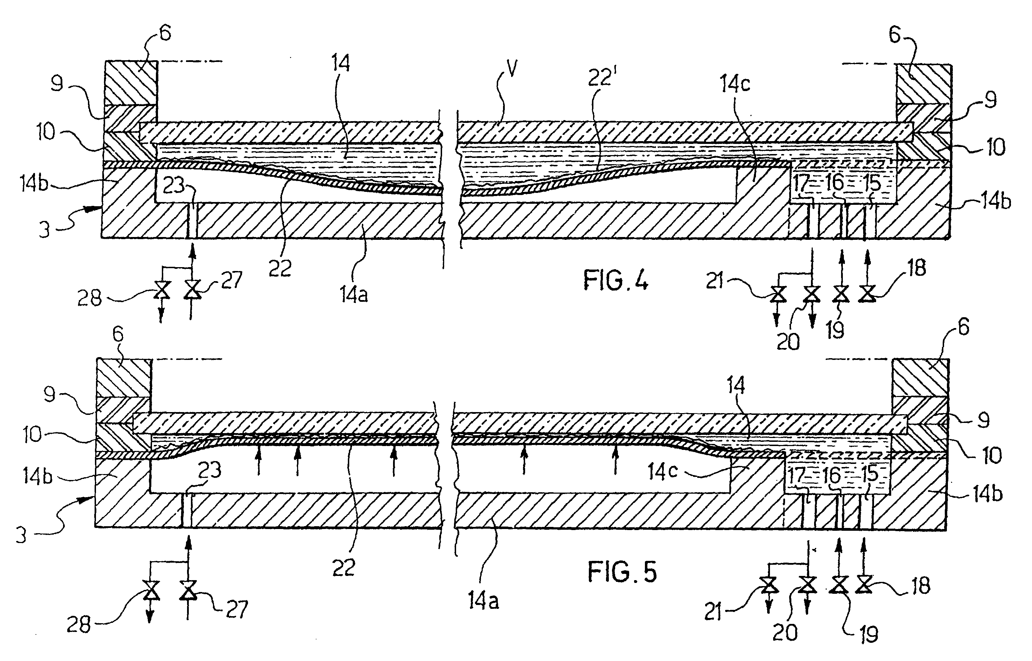

The pipe 15a puts the tank 14 in communication with a source of acid, while the pipe 16a puts said tank 14 in communication with a source of water, for example the water mains. Additionally, the device can include pumping devices (not shown in the figure) and respective valve means 18, 19 (schematically shown in figures 4 and 5) to facilitate the flow from said sources of acid and water to the tank 14.

The tubular fitting 17, on the other hand, is connected by means of a two-way fitting to the pipes 17a for draining the waste acid and 17b for draining the rinsing water. Additionally, valve means 20, 21 (schematically shown in Figures 4 and 5) will have to be provided for alternatively allowing the acid to drain via said pipe 17a and the water to drain via said pipe 17b.

Said pipes 17a, 17b lead to suitable collection tanks from where the liquids used in the process can be taken and disposed of. The pipes 17a, 17b can also be connected to pumping means (not shown in the figure) to facilitate draining of the tank 14.

It is clear that the pipes which are in contact with the acid must also be made of acid-resistant material.

Said elastic seals 10 are arranged on the perimetral ridged edges 14a and act as a support for the sheet of glass to be worked.

A sheet 22 of suitable acid-resistant plastic material is stretched over the tank 14 and covers the entire surface of the tank, with the exception of the delimited portion 14' which contains said tubular fittings.

The sheet 22 is fastened along the perimetral edges 14b of the tank and along the edges 14c of said delimited portion 14', while the remaining surface is left free to move. Corrugations or folds 22', or various types of decorative pattern which, as will be described in greater detail below, will be reproduced on the sheet of glass by means of the treatment with acid, are then made on the upper surface of the sheet 22, which faces the glass sheet, for example by gluing a thin film of acid-resistant plastic material to it. Alternatively, a relief pattern can be pre-formed on the sheet 22 itself (for example, according to the high relief or bas-relief method).

It is important to note that said ridged edges 14b, 14c do not extend as far as coming into contact with the sheet of glass, as the latter is carefully placed on the perimetral seals 10 which, in turn, are arranged on the edges 14b on top of the sheet 22. Consequently, there is a gap between the sheet 22 and the sheet of glass where the acid is let in, as will be described in greater detail below.

Preferably, a side duct (not shown in the figure) to release residual air bubbles which tend to accumulate when the tank is filled with acid will be made in the edges 14b of the tank 14, over the fastening point of said sheet 22. This release duct is made close to the end opposite on the diagonal to the delimited portion 14' of the tank. Towards the outside, this duct is connected by means of a tube to the waste acid collection tank, directly or via the pipe 17a. This is because, inevitably, as the acid is let in and once the residual air has been eliminated, a little acid seeps out and can thus be collected in said tank. The release duct can also be used, by means of suitable valve fittings, to let in compressed air in order to accelerate the drainage of the rinsing water.

It is also clear that there is a gap between the underside of the sheet 22 and the bottom 14a of the tank 14, which is due to the fact that the sheet 22 is fastened to the ridged edges of the tank itself.

A duct 23 is located on the bottom 14a of the tank 14, under the sheet 22, and is connected to a two-way tubular fitting 24 which lets compressed air (or other suitable inert fluid) in and out.

Air inlet 25 and outlet 26 pipes are connected to said fitting 24. The pipe 25 is connected to a source of compressed air, or other suitable fluid, and includes valve means 27. The pipe 26 leads to the outside and includes valve means 28. Additionally, the pipe 26 can be connected to pumping means (not shown in the figure) to facilitate evacuating the air from the tank 14.

Advantageously, said duct 23 should be located close to the apex of the tank 14 opposite on the diagonal to said delimited portion 14', for reasons which will appear more clearly below.

The support 3 comprises, at the front outer edge (destined to be located underneath when the support 3 is in a substantially vertical position), two or more projecting brackets 29. Said brackets 29 support the sheet of glass when it is placed on the support 3 during the loading stage.

Finally, the device comprises a control unit 30 which can advantageously be arranged on the fixed rear structure 5 of the stand 2 to control the actuators 7 and 11 and the valves 18, 19, 20, 21, 27 and 28.

Again with reference to the figures, the operation of the device 1 for etching a sheet of glass with acid, and to which this invention relates, will now be described.

The device 1 is initially in a loading position, in which the support 3 is arranged in a substantially vertical position, while the frame 6 is raised, as shown in Figure 1. The corrugations 22' - for example forming a wavy pattern, an irregular pattern or realistic or abstract drawings - will have been formed on the sheet 22 beforehand. Said corrugations 22' can be fixed in various ways, normally by means of suitable adhesives.

A sheet of glass V is then placed on said support 3, carefully positioned on the perimetral seals 10, and supported by the brackets 29. The sheet V will be placed so that the side to be etched faces the tank 14.

The support 3 is taken to a substantially horizontal position by means of the actuator 7 and the frame 6 is lowered on top of it by means of the respective actuator 11.

The sheet V is then clamped between the seals 10 on the support 3 and the seals 9 on the frame 6. The clamping action is supplemented by the clamps 13, which can exert a sufficient holding pressure on the sheet of glass V so as to prevent leakage of acid from the tank 14 during the subsequent working phase (Figures 2 and 4).

Preferably, the support 3 is not actually horizontal but is slightly slanted in the direction of its diagonal so that the delimited portion 14' is in a lower position with respect to the rest of the support. This facilitates draining of the tank 14 at the end of the working phase and additionally allows any residual air bubbles to collect in a corner of the tank and to be removed via the release duct described above as the liquids are loaded into said tank.

The following phase consists in letting acid into the tank 14 through the tubular fitting 15, at least until the surface of the sheet 22 is totally covered. An aqueous solution of hydrofluoric acid is used as the acid, usually in a concentration of approximately 30%. This is because, as is known, hydrofluoric acid easily attacks glass at ambient temperature.

The acid is then drained through the pipe 17a after opening the valve 20, which is then closed again when the draining operation is over. It is clear that, at this point, in the absence of rinsing with water, a thin coating of acid will remain in the tank 14 and particularly on the surface of the sheet 22. In particular, as the surface of the sheet has a plurality of corrugations or folds 22', obviously the acid will remain trapped in greater amounts in the recesses formed between the folds while only a thin coating of acid will remain on the peaks of the folds.

The next phase of the method entails letting air in through the tubular fitting 23 so as to inflate the sheet 22 until it comes into contact with the surface of the sheet of glass V to be etched (Figure 5). During this contact, for the aforementioned reasons, the sheet V is chemically etched by the acid. The greater the amount of acid coming into contact with the glass, the deeper the etching will be. Consequently, the etching will be shallower along the peaks of said corrugations 22', becoming progressively deeper away from said peaks towards the gaps between the corrugations.

The resulting effect is to reproduce patterns with shaded contours on the glass. In particular, depending on whether the initial glass is clear or frosted, the result will be "antique glass" or glass with different degrees of opacity.

The final result also depends on the time the acid is left in contact with tne surface of the sheet of glass V. This time is generally of the order of approximately 15 minutes, but can obviously be varied according to requirements.

Another defining factor is the concentration of the hydrofluoric acid used. This is because concentrations higher or lower than 30% w/v can be used, suitably balancing the contact times according to the type of working process required.

At the end of the predefined period of contact between the glass and the acid, the air is drained through the pipe 26, preferably by means of a pump. The sheet will then be returned to the rest position, as shown in Figure 4.

The following phase consists in letting in rinsing water through the tubular fitting 16 to fill the tank 14. After rinsing, the water is drained through the pipe 17b by opening the valve 21. The rinsing operation, if required, can be repeated.

The sheet is then released by releasing the clamps 13 and taking the support 3 back to its vertical position, as shown in Figure 1.

The particular feature of the method to which this invention relates and of the aforementioned device specifically designed to implement this method, is thus that it allows a sheet of glass to be etched with acid so as to create patterns with shaded contours. The known methods, on the other hand, allow only patterns with well-defined contours to be obtained. This is because these methods employ a masking of those portions of the glass surface which will not be etched, while the remaining surface comes into contact with the same amount of acid in the same way, thus producing an even etching with clearly defined contours.

The essential element which distinguishes the method forming the subject of this invention from known methods is, rather, the fact that the sheet of glass is in contact with the surface of a printing plate (a suitably corrugated sheet (22), in the aforesaid example), on which patterns have been made in relief and on which a coating of acid of uneven thickness has been deposited, said coating of acid being thinner along the peaks of said relief patterns and progressively thicker in the recesses of said surface, so that the amount of acid which comes into contact with the surface of the sheet of glass is different from one area to the other of the surface of said sheet.

The amplitude of the shading obtained is also directly proportional to the softness and the elasticity of the material used to reproduce the reliefs on the sheet 22.

It is important to note that with the method of this invention, the entire surface of the sheet of glass is etched by the acid, even if to different degrees.

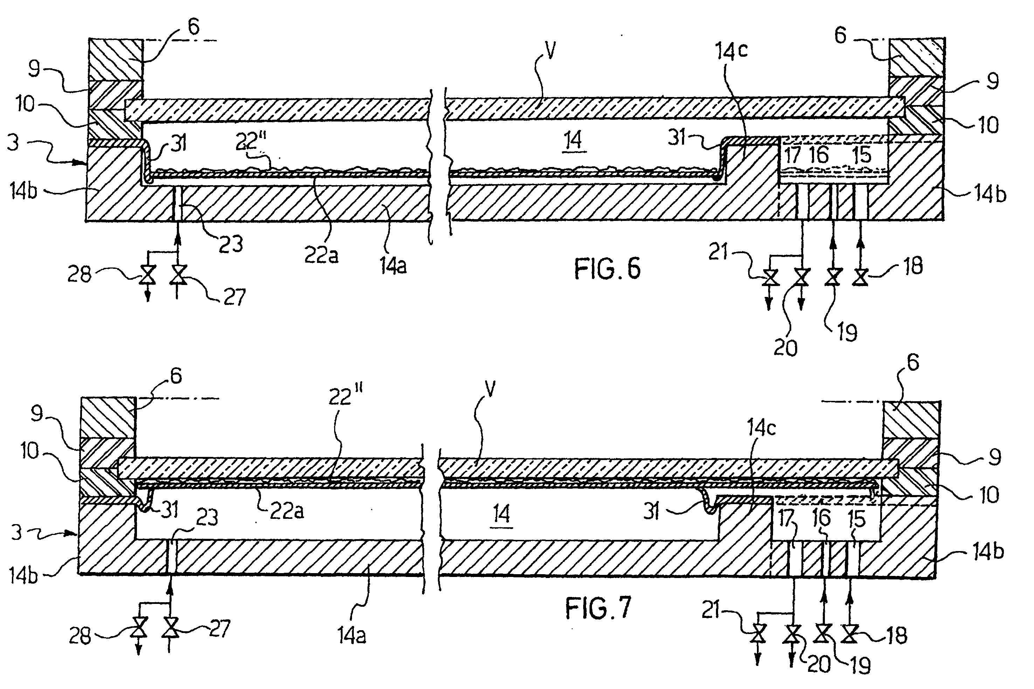

For the aforementioned reasons, it is evident that the sheet 22 with the corrugations 22' can be replaced by a stiff or elastic plate 22a, on the upper surface of which, destined to come into contact with the glass surface, relief patterns 22'' are pre-formed (for example, according to the bas-relief or high relief techniques), as shown in Figures 6 and 7. In this case, however, it will be necessary to provide fastening devices along the edges of the plate for securing said plate to the edges 14b, 14c of the tank 14 so as to allow a vertical movement of the plate under the effect of the air let in underneath it. For example, said fastening devices may consist of a tape 31 made of acid-resistant plastic, which extends along the entire length of the perimetral edges of the plate 22a and is secured on one side to said edges of the plate and on the other side to the edges 14b, 14c of the tank 14. The tape 31 will have a sufficient width to extend as required to allow the plate 22a to come into contact with the sheet of glass V. Alternatively, the tape 31 can be made of elastic material.

It is clear that the embodiments described are solely specific embodiments of the device for etching sheets of glass with acid according to the present invention, and that a person skilled in the art will be capable of carrying out any modifications that may be necessary in order to adapt it to specific applications, without thereby departing from the scope of protection of the present invention.

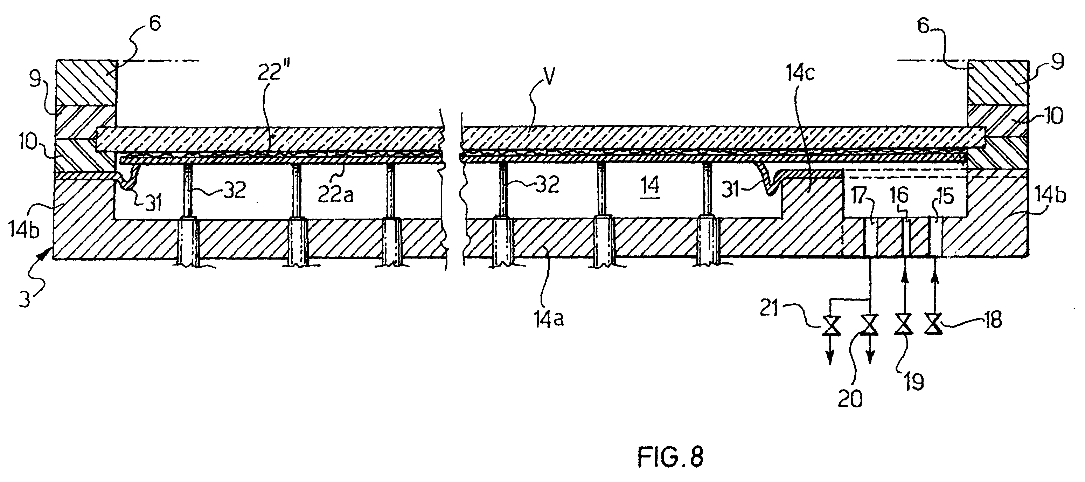

For example, as shown in Figure 8, it will be possible to lift the sheet 22 or the plate 22a, until it touches the sheet of glass, by means of a plurality of jacks 32 which can be either manually or pneumatically operated and are located under said sheet or plate.

Another possible variant of the device forming the subject of this invention consists in positioning the tank of hydrofluoric acid over the tank 14, so as to allow the acid to be loaded into the tank by the force of gravity alone.

## Claims

1. Method for etching a sheet of glass (V) with acid, comprising the following phases:
- taking a printing plate (22, 22a), a surface of which has corrugations (22') or relief patterns (22'');
- depositing a coating of acid of uneven thickness on said printing plate (22,22a), said coating of acid being thinner along the peaks of said corrugations (22') or relief patterns (22'') and progressively thicker in the recesses of said surface of the printing plate (22, 22a) ;
- putting said sheet of glass (V) in contact with said surface of said printing plate (22,22a) on which the coating of acid is deposited, so that the amount of acid which comes into contact with the surface of the sheet of glass (V) is different from one area to the other of said surface.

2. Method according to Claim 1 in which said deposit of said coating of acid is obtained by spraying said surface of said printing plate (22,22a) with said acid and subsequently removing the excess acid by draining it off.

3. Method according to Claim 1 or 2, comprising in addition at least one rinsing phase in which the surface of the treated sheet of glass (V) is rinsed with water.

4. Method according to any one of Claims 1 to 3, in which said acid is hydrofluoric acid at approximately 30% w/v.

5. Method according to any one of Claims 1 to 4, in which the time of contact between the acid and the surface of said sheet of glass (V) is approximately 15 minutes.

6. Device for etching a sheet of glass (V) with acid, comprising a support (3) and a removable retention frame (6) located over said support (3), and support (3) comprising a tank (14) fitted with means (15, 16, 17) for loading and/or draining acid and water, said device being **characterized in that** a printing plate (22, 22a) is fixed to the edges (14b, 14c) of said tank (14), said printing plate being free to assume a lowered and raised position in which it comes substantially into contact with the surface to be treated of said sheet of glass (V), the surface of said printing plate (22,22a) destined to substantially come into contact with said sheet of glass (V) having corrugations (22') or relief patterns (22''), and means (23, 32) being provided for lifting said printing plate from said lowered position to said raised position, the device being additionally **characterized in that** said means (15, 16, 17) for loading and/or draining acid and water are in fluid communication with the gap of said tank (14) over said printing plate (22, 22a).

7. Device according to Claim 6, in which said printing plate is a sheet (22) made of acid-resistant plastic material.

8. Device according to Claim 6, in which said printing plate is a plate (22a) made of stiff or elastic material.

9. Device according to any one of Claims 6 to 8, in which said means for lifting said printing plate (22, 22a) consist of a tubular fitting (23) for letting compressed air in and/or out, said tubular fitting being connected to a source of compressed air, so that said compressed air, as it fills the gap of said tank (14) under said printing plate (22, 22a), causes it to be lifted from said lowered position to said raised position.

10. Device according to any one of Claims 6 to 8, in which said means for lifting said printing plate (22, 22a) consist of a plurality of jacks (32).

11. Items made of glass etched with acid obtained according to the method as claimed in any one of Claims 1 to 5.

## Patentansprüche

1. Verfahren zum Ätzen von Flachglas (V) mit Säure, mit den folgenden Phasen:
- Nehmen einer Druckplatte (22,22a), die eine Oberfläche mit Wellen bzw. Rippen (22') oder Reliefmustern (22") besitzt,
- Aufbringen einer Beschichtung aus Säure ungleichmäßiger Stärke auf die Druckplatte (22,22a), wobei die Beschichtung aus Säure dünner entlang den Spitzen der Rippen bzw. Wellen (22') oder der Reliefmuster (22") und zunehmend dicker in den Ausnehmungen der Oberfläche der Druckplatte (22,22a) ist,
- Bringen des Flachglases (V) in Kontakt mit der Oberfläche der Druckplatte (22,22a), auf der die Beschichtung aus Säure aufgebracht ist, so dass die Menge an Säure, die in Kontakt mit der Oberfläche des Flachglases (V) gelangt, unterschiedlich ist von einem Bereich der Oberfläche zu dem anderen.

2. Verfahren gemäß Anspruch 1, bei dem die Ablagerung der Beschichtung aus Säure durch Besprühen der Oberfläche der Druckplatte (22,22a) mit der Säure und nachfolgendes Entfernen der überschüssigen Säure durch Ablaufenlassen erhalten wird.

3. Verfahren gemäß Anspruch 1 oder 2, zusätzlich mit mindestens einer Spülphase, in der die Oberfläche des behandelten Flachglases (V) mit Wasser gespült wird.

4. Verfahren gemäß einem der Ansprüche 1 bis 3, bei dem die Säure Fluorwasserstoffsäure mit etwa 30% g/v ist.

5. Verfahren gemäß einem der Ansprüche 1 bis 4, bei dem die Kontaktzeit zwischen der Säure und der Oberfläche des Flachglases (V) etwa 15 Minuten beträgt.

6. Vorrichtung zum Ätzen von Flachglas (V) mit Säure, mit einem Support (3) und einem entfernbaren Rückhalterahmen (6), der über dem Support (3) gelegen ist, wobei der Support (3) einen Tank (14) umfasst, welcher mit Mitteln (15,16,17) zum Laden und/oder Ablassenlaufen von Säure und Wasser versehen ist, wobei die Vorrichtung **dadurch gekennzeichnet ist, dass** eine Druckplatte (22,22a) an den Rändern (14b,14c) des Tanks (14) befestigt ist, wobei die Druckplatte eine abgesenkte Position und eine angehobene Position, in der sie im Wesentlichen in Kontakt mit der zu behandelnden Oberfläche des Flachglases (V) kommt, frei einnehmen kann, wobei die Oberfläche der Druckplatte (22,22a) die für das im Wesentlichen in-Kontakt-Gelangen mit dem Flachglas (V) bestimmt ist, Wellungen bzw. Rippen (22') oder Reliefmuster (22") besitzt, sowie Mitteln (23,32), die zum Anheben der Druckplatte von der abgesenkten Position in die angehobene Position vorgesehen sind, wobei die Vorrichtung zusätzlich **dadurch gekennzeichnet ist, dass** die Mittel (15,16,17) zum Laden und/oder Ablaufenlassen von Säure und Wasser in Fluidverbindung mit dem Spalt des Tanks (14) über der Druckplatte (22,22a) sind.

7. Vorrichtüng gemäß Anspruch 6, bei der die Druckplatte eine Lage (22) aus säureresistentem Kunststoffmaterial ist.

8. Vorrichtung gemäß Anspruch 6, bei der die Druckplatte eine Platte (22a) aus steifem oder elastischem Material ist.

9. Vorrichtung gemäß einem der Ansprüche 6 bis 8, bei der die Mittel zum Anheben der Druckplatte (22,22a) aus einem rohrförmigen Anschlussstück (23) zum Ein- und/oder Auslassen von komprimierter Luft bestehen, wobei das rohrförmige Anschlussstück mit einer Quelle für komprimierte Luft verbunden ist, so dass die komprimierte Luft, wenn diese den Spalt des Tanks (14) unter der Druckplatte (22,22a) füllt, bewirkt, dass diese von der abgesenkten Position in die angehobene Position angehoben wird.

10. Vorrichtung gemäß einem der Ansprüche 6 bis 8, bei der die Mittel zum Anheben der Druckplatte (22,22a) aus mehreren Hebezeugen (32) bestehen.

11. Gegenstände, hergestellt aus mit Säure geätztem Glas, erhalten gemäß dem Verfahren gemäß einem der Ansprüche 1 bis 5.

## Revendications

1. Procédé pour attaquer une feuille de verre (V) à l'aide d'acide, comprenant les phases suivantes :
- prendre une plaque d'impression (22, 22a) dont une surface a des ondulations (22') ou des motifs en relief (22") ;
- déposer un revêtement d'acide d'épaisseur inégale sur ladite plaque d'impression (22, 22a), ledit revêtement d'acide étant plus fin le long des pics desdites ondulations (22') ou desdits motifs en relief (22'') et progressivement plus épais dans les creux de ladite surface de la plaque d'impression (22, 22a) ;
- mettre ladite feuille de verre (V) en contact avec ladite surface de ladite plaque d'impression (22, 22a) sur laquelle le revêtement d'acide est déposé, de façon à ce que la quantité d'acide qui vient en contact avec la surface de la feuille de verre (V) soit différente d'une région à l'autre de ladite surface.

2. Procédé selon la revendication 1, dans lequel ledit dépôt dudit revêtement d'acide est obtenu en pulvérisant ladite surface de ladite plaque d'impression (22, 22a) avec ledit acide et en éliminant par la suite l'excès d'acide par drainage.

3. Procédé selon la revendication 1 ou 2, comprenant l'addition d'au moins une phase de rinçage dans laquelle la surface de la feuille de verre traitée (V) est rincée avec de l'eau.

4. Procédé selon l'une quelconque des revendications 1 à 3, dans lequel ledit acide est l'acide fluorhydrique à environ 30% en poids par volume.

5. Procédé selon l'une quelconque des revendications 1 à 4, dans lequel le temps de contact entre l'acide et la surface de ladite feuille de verre (V) est approximativement de 15 minutes.

6. Dispositif pour attaquer une feuille de verre (V) à l'aide d'acide, comprenant un support (3) et un cadre de rétention amovible (6) situé au-dessus dudit support (3), et le support (3) comprenant un réservoir (14) équipé de moyens (15, 16, 17) pour introduire et/ou drainer l'acide et l'eau, ledit dispositif étant **caractérisé en ce qu'**une plaque d'impression (22, 22a) est fixée sur les côtés (14b, 14c) dudit réservoir (14), ladite plaque d'impression étant libre de prendre une position abaissée et une position élevée dans laquelle elle est essentiellement en contact avec la surface à traiter de ladite feuille de verre (V), la surface de ladite plaque d'impression (22, 22a) destinée à venir essentiellement en contact avec ladite feuille de verre (V) ayant des ondulations (22') ou des motifs en relief (22") et des moyens (23, 32) étant fournis pour soulever ladite plaque d'impression de ladite position abaissée à ladite position élevée, le dispositif étant de plus **caractérisé en ce que** lesdits moyens (15, 16, 17) pour introduire et/ou drainer l'acide et l'eau sont en communication de fluide avec l'espace dudit réservoir (14) au-dessus de ladite plaque d'impression(22, 22a).

7. Dispositif selon la revendication 6, dans lequel ladite plaque d'impression est une feuille (22) faite de matériau plastique résistant à l'acide.

8. Dispositif selon la revendication 6, dans lequel ladite plaque d'impression est une plaque (22a) faite de matériau rigide ou élastique.

9. Dispositif selon l'une quelconque des revendications 6 à 8, dans lequel lesdits moyens pour soulever ladite plaque d'impression (22, 22a) consistent en une pièce de fixation tubulaire (23) pour laisser de l'air comprimé entrer et/ou sortir, ladite pièce de fixation tubulaire étant connectée à une source d'air comprimé, de façon à ce que ledit air comprimé, à mesure qu'il remplit l'espace dudit réservoir (14) sous ladite plaque d'impression (22, 22a), la soulève de ladite position abaissée à ladite position élevée.

10. Dispositif selon l'une quelconque des revendications 6 à 8, dans lequel lesdits moyens pour soulever ladite plaque d'impression (22, 22a) consistent en une multitude de vérins (32).

11. Articles faits de verre attaqué à l'aide d'acide obtenu selon le procédé selon l'une quelconque des revendications 1 à 5.
